# EUROPEAN PATENT SPECIFICATION

(11) **EP 0 776 810 B1**
(45) Date of publication and mention of the grant of the patent: **04.07.2001**
(21) Application number: 96203337.9
(22) Date of filing: 27.11.1996
(51) Int. Cl.: B62B 3/00, B62B 5/00

(54) **Transport vehicle**
Transportfahrzeug
Véhicule de transport

(30) Priority: 29.11.1995 NL 1001768
(43) Date of publication of application: 04.06.1997
(73) Proprietor: Rockwool Lapinus B.V., 6045 JG Roermond (NL)
(72) Inventor: Ettema, Antonius Marinus, 6049 KV Herten (NL); Eisinger, Charel David, 6095 CA Baexem (NL)
(74) Representative: Eveleens Maarse, Pieter

(56) References cited:
- BE-A- 551 530
- DE-A- 3 405 147
- DE-U- 8 127 639
- FR-A- 991 731
- FR-A- 1 082 854

## Description

This transport vehicle according to the invention is particularly applied in the transporting of a load below which the transport vehicle can be placed, for instance a load placed on a pallet.

FR-A-1 082 854 discloses a transport vehicle, comprising:
- a supporting frame and first and second lifting means,
   * the first lifting means being provided on a first side of the supporting frame and comprising rolling means,
   * the second lifting means being provided at the second side of the supporting frame and comprising second rolling means,
   * the first lifting means comprising a lifting frame, detachable from the supporting frame, and being connected hingedly to the supporting frame, and acting as rotatable mounting of the rolling means,

Although this prior art transport vehicle is well suited for transporting voluminous loads, it is not easy for a person to manoeuvre this vehicle under a load.

The aim of the invention is to provide such a transport vehicle which allows an easy positioning under the load to be transported.

This aim is reached in that third rolling means are located under the supporting frame and are located closer to the first rolling means than to the second rolling means, and that the third rolling means comprise at least a roller having an axial length greater than its diameter.

The provision of third rolling means allows an easy positioning under the load while the use of rolling means of which the axial length is greater than the diameter reduces the height of that part of the vehicle to be located under the load, so that the vehicle can also be used in situations with little clearance between the load an the supporting surface.

If in preference the hinged lifting frame is pivoted between a first low position and a second raised position in which the rolling axis of the rolling means is pivoted beyond the pivot axis, it is even possible to dispense with separate locking means because the second raised position is situated in a so-called "over-centered" position.

If in further preference the second rolling means are fixed to the supporting frame such that the supporting frame inclines downward from the one side to the other, the supporting frame of the transport vehicle can easily be carried, due to this inclination, into a position under a relatively low-lying load. If in further preference the coupling means comprise hinge means, this supporting frame can be lifted in simple manner on the other side of the supporting frame. A robust embodiment exists if in further preference the second lifting means comprise a second lifting frame acting as rotatable mounting of the rolling means.

If in further preference the second lifting frame can be coupled steerably to the supporting frame a transport vehicle results which becomes easily steerable on the other side of the supporting frame, which enhances the displaceability of the transport vehicle.

If the rolling means comprise at least two mutually axially oriented rollers, turning movements can be performed easily due to the differential operation with substantially no rotational friction occurring therein.

An easy to control transport vehicle without too many separate components results if in further preference the first and the second lifting means can be operated with the same control means.

It will be apparent that the rolling means can in principle consist of wheels and the like. If the transport vehicle is intended for travel over a surface which is uneven, sagging under the load or consists of a profiled surface such as a profiled roof, it is further recommended that the rolling means consist of relatively long rollers, whereby the load is spread over a greater length.

Mentioned and other features of a transport vehicle according to the invention will be further elucidated hereinbelow on the basis of an embodiment which is only given by way of example and wherein reference is made to the annexed drawing.

In the drawing:
figure 1 shows a perspective, partly broken away view of a transport vehicle according to the invention;
figure 2 is a view corresponding with figure 1 wherein the transport vehicle is provided with a load and can be moved steerably over the roof;
figure 3 is partly broken away side view of a transport vehicle according to the invention in the lowered position; and
figure 4 is a side view corresponding with figure 3 with the transport vehicle in the lifted position.

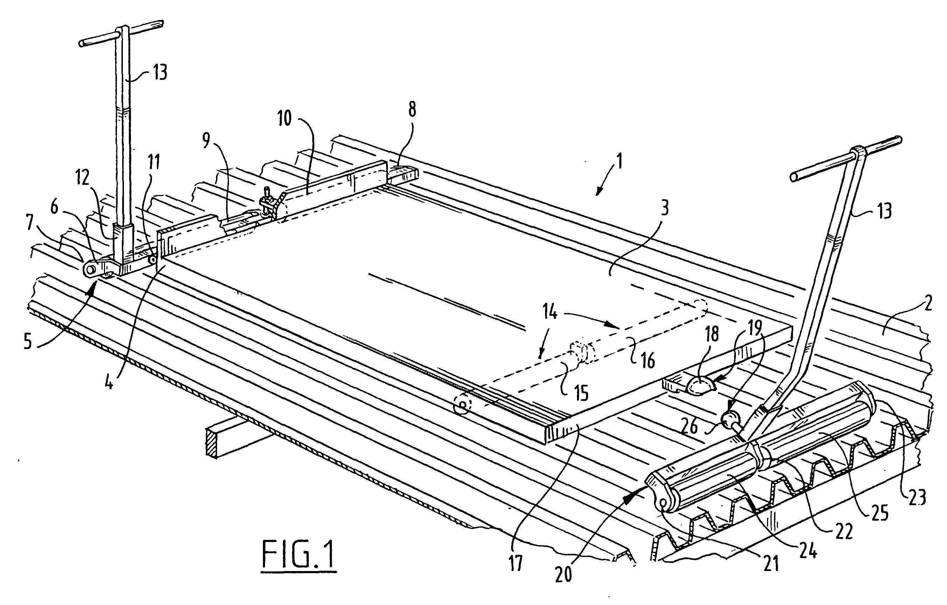

Figure 1 shows a transport vehicle 1 according to the invention which can travel over a profiled roof 2. Transport vehicle 1 comprises a supporting frame or supporting platform 3 which is provided on the one side 4 with lifting means 5. A lower weight can be achieved by embodying supporting platform 3 as an open framework. The first lifting means 5 comprise a bracket-shaped lifting frame 6 provided with legs 7, 8 between which rotatably mounted rollers 9 and 10 are arranged. Lifting frame 6 is hingedly connected via a hinge 11 to the supporting frame 3 and further provided with a fixing piece 12 for an control member 13 which can also take a bent form.

Arranged under supporting frame 3 are second rolling means 14 which likewise consist of rollers 15 and 16.

On the other side 17 the supporting frame is provided with a coupling member 18 which forms part of the coupling means 19.

To the supporting frame 3 can thus be coupled a second lifting frame 20 which is embodied in bracket shape and has rollers 24 and 25 rotatably mounted between the legs 21-23. Lifting frame 20 is likewise provided with a coupling member 26 co-acting with coupling member 18.

Coupling member 18 and coupling member 26 together form in this case a ball and socket joint. It will however be apparent that other types of hinge can be applied while ball and socket of the shown ball and socket joint are mutually interchangeable. In addition, lifting frame 20 is likewise provided with a fixing piece 27 for the control member 13.

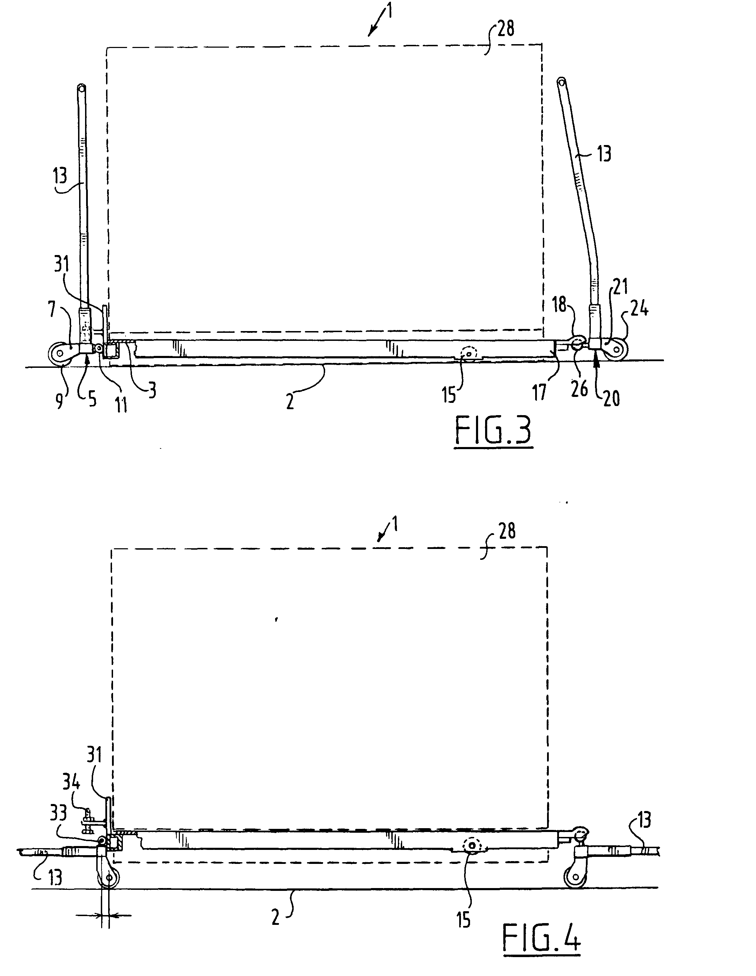

As shown further in figure 3 and 4, the operation of transport vehicle 1 according to the invention is as follows. Transport vehicle 1 is moved under a load 28 to a position between the blocks 29 and 30. The other side 17 moves under the load using the rollers 9, 10 and 15 until the load comes up against stop 31. By operating the control member 13 the lifting frame is then pivoted over hinge 11 into the position shown in fig. 4, wherein from the first position of fig. 3 the second raised position of fig. 4 is reached in which the rolling axis 32 of the rollers 9, 10 lies beyond the pivot axis 33.

Pivoting into the first position is adjustable using the stop 34.

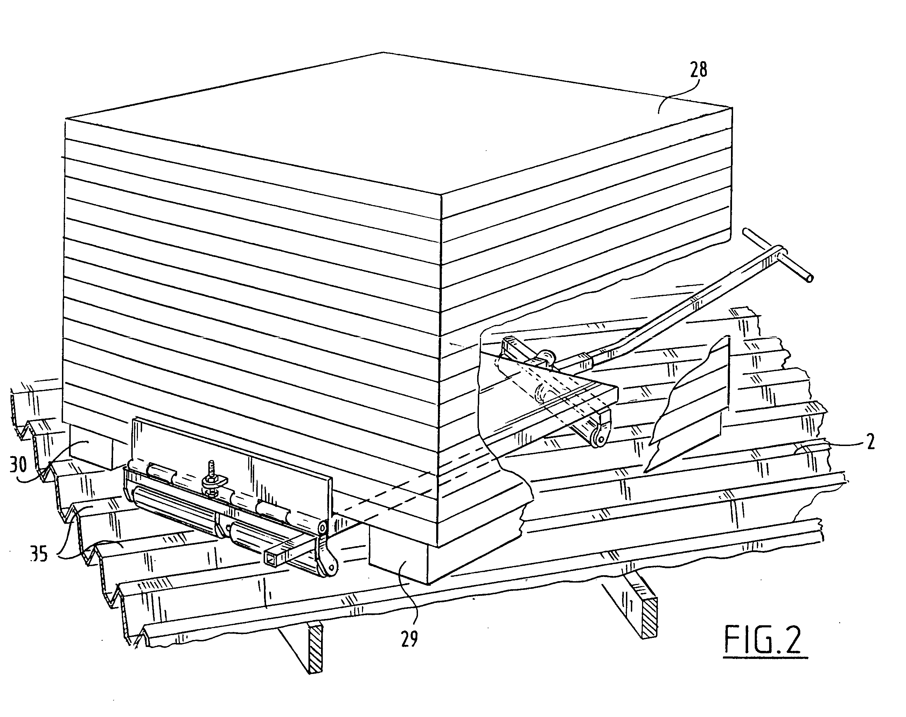

With control member 13 the second lifting frame is subsequently coupled to supporting frame 3 via coupling means 19 and brought into the raised position by again pivoting to the position shown in fig. 4. The second rolling means 15 now lie clear of the surface 2. It is then possible to displace the vehicle steerably over the surface 2 as shown in figure 2.

It will be apparent herein that if ridge parts 35 of the roof sag, this cannot cause a sagging such that the blocks 29, 30 again rest on or make contact with the surface 2.

When the desired position for the load 28 has been reached the load can be released in the reverse of the above described sequence and the transport vehicle removed for an otherwise useful purpose.

## Claims

1. Transport vehicle (1), comprising:
- a supporting frame (3) and first (13,19-25) and second ( 5-10,13) lifting means,
* the first lifting means being provided on a first side of the supporting frame and comprising rolling means (24,25),
* the second lifting means being provided at the second side of the supporting frame and comprising second rolling means (9,10),
* the first lifting means (13,19-25) comprising a lifting frame (19-23), detachable from the supporting frame (3), and being connected hingedly to the supporting frame (3), and acting as rotatable mounting of the rolling means (24,25),
**characterized by** third rolling means (15,16), located under the supporting frame (3), and being located closer to the first rolling means (24,25) than to the second rolling means (9,10), and that the third rolling means (15,16) comprise at least a roller (15,16) having an axial length greater than its diameter.

2. Transport vehicle (1) as claimed in claim 1, wherein the hinged lifting frame (19-23) is pivotable between a first low position and a second raised position in which the rolling axis (21) of the rolling means (24,25) is pivoted beyond the pivot axis (18,19).

3. Transport vehicle (1) as claimed in claim 1 or 2, wherein the second rolling means (9,10) are fixed to the supporting frame (3) such that the supporting frame (3) inclines downward from the one side to the other.

4. Transport vehicle as claimed in claims 1-3, wherein the coupling means comprise hinge means (18,19).

5. Transport vehicle as claimed in claim 4, wherein the lifting frame (19-23) can be coupled steerably to the supporting frame (3).

6. Transport vehicle as claimed in claims 1-5, wherein the rolling means comprise at least two mutually axially oriented rollers (9,10,24,25).

7. Transport vehicle as claimed in claims 1-6, wherein the first (13;19-25) and the second (5-10;13) lifting means can be operated with the same control member (13).

## Patentansprüche

1. Transportfahrzeug (1) mit:
- einem Tragrahmen (3) und einer ersten (13, 19-25) und zweiten (5-10, 13) Hubeinrichtung,
- wobei die erste Hubeinrichtung an einer ersten Seite des Tragrahmens angeordnet ist und eine Rollanordnung (24, 25) aufweist,
- die zweite Hubeinrichtung an der zweiten Seite des Tragrahmens angeordnet und eine zweite Rollanordnung (9, 10) aufweist
- und wobei die erste Hubeinrichtung (13, 19-25) einen Hubrahmen (19-23) aufweist, der vom Tragrahmen (3) lösbar und mit dem Tragrahmen (3) schwenkbar verbunden ist und als drehbare Lagerung der Rollanordnung (24, 25) dient,
**gekennzeichnet** durch eine dritte Rollanordnung (15, 16), die unter dem Tragrahmen (3) angeordnet und näher an der ersten Rollanordnung (24, 25) als an der zweiten Rollanordnung (9, 10) angeordnet ist, und daß die dritte Rollanordnung (15, 16) mindestens eine Rolle (15, 16) aufweist, deren axiale Länge größer als ihr Durchmesser ist.

2. Transportfahrzeug (1) nach Anspruch 1, bei dem der schwenkbare Hubrahmen (19-23) schwenkbar ist zwischen einer ersten, unteren Position und einer zweiten, angehobenen Position, in der die Rollachse (21) der Rollanordnung (24, 25) über die Schwenkachse (18, 19) hinausgeschwenkt ist.

3. Transportfahrzeug (1) nach Anspruch 1 oder 2, bei dem die zweite Rollanordnung (9, 10) an dem Tragrahmen (3) so befestigt ist, daß der Tragrahmen (3) von der einen zu der anderen Seite hin abwärts geneigt ist.

4. Transportfahrzeug nach den Ansprüchen 1 bis 3, bei dem die Kupplungsmittel Scharniermittel (18, 19) umfassen.

5. Transportfahrzeug nach Anspruch 4, bei dem der Hubrahmen (19-23) lenkbar mit dem Tragrahmen (3) gekuppelt werden kann.

6. Transportfahrzeug nach den Ansprüchen 1 bis 5, bei dem die Rollanordnung mindestens zwei axial zueinander ausgerichtete Rollen (9, 10, 24, 25) umfaßt.

7. Transportfahrzeug nach den Ansprüchen 1 bis 6, bei dem die erste (13, 19-25) und die zweite (5-10, 13) Hubeinrichtung mit dem gleichen Betätigungselement (13) betätigbar sind.

## Revendications

1. Véhicule de transport (1), comprenant :
- un châssis de support (3) et des premiers (13, 19 à 25) et seconds (5 à 10, 13) moyens de levage,
* les premiers moyens de levage étant prévus sur un premier côté du châssis de support et comprenant des moyens de roulement (24, 25),
* les seconds moyens de levage étant prévus sur le second côté du châssis de support et comprenant des deuxièmes moyens de roulement (9, 10),
* les premiers moyens de levage (13, 19 à 25) comprenant un cadre de levage (19 à 23), pouvant être détaché du châssis de support (3), et étant reliés de manière articulée au châssis de support (3), et agissant comme montage rotatif des moyens de roulement (24, 25),
caractérisé par des troisièmes moyens de roulement (15, 16), situés sous le châssis de support (3), et qui sont situés plus près des premiers moyens de roulement (24, 25) que les deuxièmes moyens de roulement (9, 10), et en ce que les troisièmes moyens de roulement (15, 16) comprennent au moins un rouleau (15, 16) ayant une longueur axiale supérieure à son diamètre.

2. Véhicule de transport (1) selon la revendication 1, dans lequel le cadre de levage articulé (19 à 23) peut pivoter entre une première position basse et une seconde position relevée dans laquelle l'axe de roulement (21) des moyens de roulement (24, 25) est tourné au-delà de l'axe de pivotement (18, 19).

3. Véhicule de transport (1) selon la revendication 1 ou 2, dans lequel les deuxièmes moyens de roulement (9, 10) sont fixés au châssis de support (3), de telle sorte que le châssis de support (3) s'incline vers le bas d'un côté vers l'autre.

4. Véhicule de transport selon les revendications 1 à 3, dans lequel les moyens d'accouplement comprennent des moyens articulés (18, 19).

5. Véhicule de transport selon la revendication 4, dans lequel le cadre de levage (19 à 23) peut être couplé de manière dirigeable au châssis de support (3).

6. Véhicule de transport selon les revendications 1 à 5, dans lequel les moyens de roulement comprennent au moins deux rouleaux (9, 10, 24, 25) mutuellement orientés axialement.

7. Véhicule de transport selon les revendications 1 à 6, dans lequel les premiers (13 ; 19 à 25) et les deuxièmes (5 à 10 ; 13) moyens de levage peuvent fonctionner avec le même élément de commande (13).
